# EUROPEAN PATENT APPLICATION

(11) **EP 4 421 959 A1**
(43) Date of publication of application: **28.08.2024**
(21) Application number: 22883037.8
(22) Date of filing: 14.10.2022
(51) Int. Cl.: H01M 50/262, H01M 10/0585, H01M 50/202, H01M 50/211

(54) **STORAGE BATTERY PRESSURIZATION STRUCTURE**

(30) Priority: 21.10.2021 JP 2021172698
(71) Applicant: NISSAN MOTOR CO., LTD., Kanagawa 221-0023 (JP); Renault s.a.s, 92100 Boulogne Billancourt (FR)
(72) Inventor: DOI, Shotaro, Atsugi-shi, Kanagawa 243-0123 (JP); ONO, Yoshitaka, Atsugi-shi, Kanagawa 243-0123 (JP); ARAI, Masaei, Atsugi-shi, Kanagawa 243-0123 (JP); TANAKA, Hiroyuki, Atsugi-shi, Kanagawa 243-0123 (JP); OSHIHARA, Kenzo, Atsugi-shi, Kanagawa 243-0123 (JP)
(74) Representative: Grünecker Patent- und Rechtsanwälte PartG mbB
(86) International application number: PCT/IB2022/000590
(87) International publication number: WO 2023/067383

(57) **Abstract**

A pressurizing structure for a storage battery which applies pressure in a thickness direction to a structure including a storage battery cell including an electrode portion packaged with a laminate exterior material or the structure including a laminate in which a plurality of the storage battery cells are laminated, the pressurizing structure including, a pair of end plates disposed at corresponding two ends of the structure in the thickness direction, and a fastening member configured to fasten the pair of end plates to each other, wherein an elastic body is disposed at at least one of positions sandwiched between the end plate and the structure, a rigid body is disposed at a position sandwiched between the elastic body and the structure, and any one of the end plate, the elastic body, and the rigid body further includes a deformation preventing portion configured to prevent deformation of the elastic body in a direction perpendicular to the thickness direction.

## Description

### TECHNICAL FIELD

The present invention relates to a pressurizing structure for a storage battery.

### BACKGROUND ART

JP 2009-99383 A discloses a pressurizing structure for a laminate including electric storage elements, and the pressurizing structure includes a pair of end plates disposed at corresponding two ends of the laminate in a thickness direction, and a plate-shaped elastic body that sandwiches the end plates from above and below and applies a pressure to the laminate in a lamination direction.

### SUMMARY OF INVENTION

In the case of applying a pressure to an electrode portion of an all-solid-state battery using lithium metal, it is necessary not only to follow expansion and contraction in the thickness direction due to charging and discharging, but also to apply a pressure higher than that in the related art to achieve interfacial bonding between solids. However, in the pressurizing structure of Patent Literature 1, it is difficult to uniformly apply a surface pressure to an electrode portion, and there is a problem that an appropriate pressure cannot be applied.

An object of the present invention is to provide a pressurizing structure for a storage battery capable of applying a uniform and appropriate surface pressure to an electrode portion.

A pressurizing structure for a storage battery according to one embodiment of the present invention is the pressurizing structure for a storage battery which applies pressure in a thickness direction to a structure including a storage battery cell including an electrode portion packaged with a laminate exterior material or the structure including a laminate in which a plurality of the storage battery cells are laminated, the pressurizing structure including, a pair of end plates disposed at corresponding two ends of the structure in the thickness direction, and a fastening member configured to fasten the pair of end plates to each other, wherein an elastic body is disposed at at least one of positions sandwiched between the end plate and the structure, a rigid body is disposed at a position sandwiched between the elastic body and the structure, and any one of the end plate, the elastic body, and the rigid body further includes a deformation preventing portion configured to prevent deformation of the elastic body in a direction perpendicular to the thickness direction.

### BRIEF DESCRIPTION OF DRAWINGS

[FIG. 1] FIG. 1 is a perspective view of a pressurizing structure for a storage battery according to a first embodiment.
[FIG. 2] FIG. 2 is a cross-sectional view of the pressurizing structure for a storage battery according to the first embodiment.
[FIG. 3] FIG. 3 is a cross-sectional view showing an example of an electrode portion constituting the pressurizing structure for a storage battery according to the first embodiment.
[FIG. 4] FIG. 4 is a cross-sectional view of a pressurizing structure for a storage battery according to a first comparative example.
[FIG. 5] FIG. 5 is a cross-sectional view of a pressurizing structure for a storage battery according to a second comparative example.
[FIG. 6] FIG. 6 is a cross-sectional view of a pressurizing structure for a storage battery according to a third comparative example.
[FIG. 7] FIG. 7 is a plan view showing an arrangement for measuring a surface pressure distribution of the electrode portion.
[FIG. 8A] FIG. 8A is a diagram showing the surface pressure distribution applied to the electrode portion according to the first embodiment.
[FIG. 8B] FIG. 8B is a diagram showing a surface pressure distribution applied to an electrode portion according to the first comparative example.
[FIG. 8C] FIG. 8C is a diagram showing a surface pressure distribution applied to an electrode portion according to the second comparative example.
[FIG. 8D] FIG. 8D is a diagram showing a surface pressure distribution applied to an electrode portion according to the third comparative example.
[FIG. 9A] FIG. 9A is a diagram showing a procedure of a quantitative evaluation of the surface pressure distribution, and is a diagram of dividing a portion pressed by the electrode portion of a pressure sensitive paper into a plurality of areas.
[FIG. 9B] FIG. 9B is a diagram showing the procedure of the quantitative evaluation of the surface pressure distribution, and is a diagram of calculating a surface pressure of each area and calculating an average value of the surface pressures of an entirety and the like based on the surface pressure of each area.
[FIG. 10] FIG. 10 is a table showing quantitative evaluations of surface pressure distributions in Comparative Examples 1 to 3 and Examples 1 to 3.
[FIG. 11] FIG. 11 is a table showing quantitative evaluations of surface pressure distributions in Examples 3 to 7.
[FIG. 12] FIG. 12 is a cross-sectional view of a pressurizing structure for a storage battery according to a second embodiment.
[FIG. 13] FIG. 13 is a cross-sectional view of a pressurizing structure for a storage battery according to a third embodiment.
[FIG. 14] FIG. 14 is a table showing quantitative evaluations of surface pressure distributions in Examples 8 to 10 and Comparative Example 4.

### DESCRIPTION OF EMBODIMENTS

### [First Embodiment]

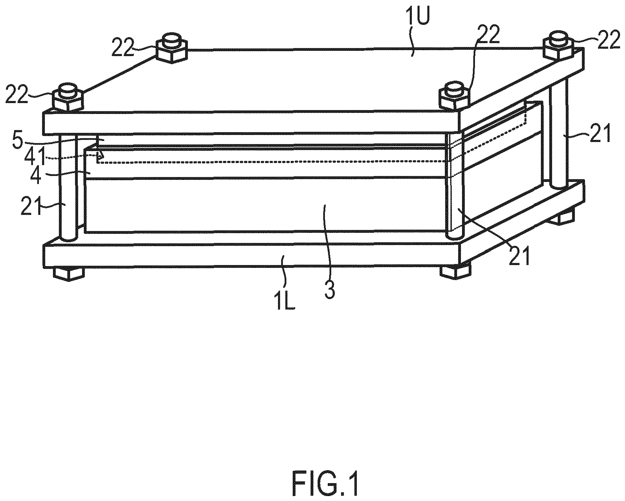

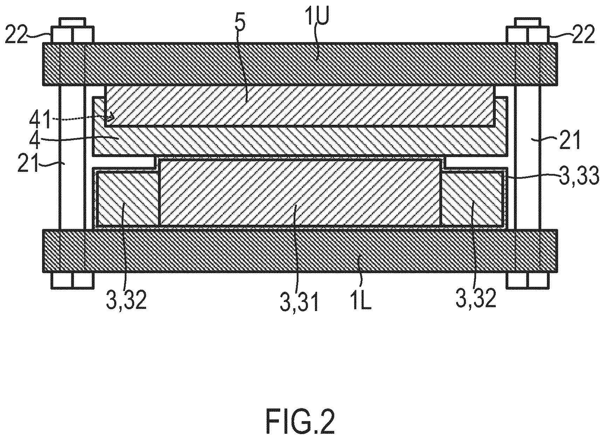

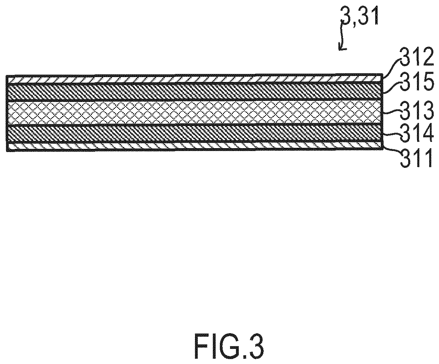

FIG. 1 is a perspective view of a pressurizing structure for a storage battery according to a first embodiment. FIG. 2 is a cross-sectional view of the pressurizing structure for a storage battery according to the first embodiment. FIG. 3 is a cross-sectional view showing an example of an electrode portion 31 constituting the pressurizing structure for a storage battery according to the first embodiment.

As shown in FIGS. 1 and 2, in the pressurizing structure for a storage battery according to the first embodiment, a storage battery cell 3 (structure) or a laminate (structure) in which a plurality of the storage battery cells 3 are laminated is sandwiched between an upper end plate 1U and a lower end plate 1L in the figures. Further, an elastic body 5 and a rigid body 4 are sandwiched between the structure and the end plate 1U. The rigid body 4 is in contact with the storage battery cell 3, and the elastic body 5 is in contact with the end plate 1U.

Here, the storage battery cell 3 is, for example, an all-solid-state battery, and includes the electrode portion 31, an insulating layer 32 that is disposed on an outer periphery of the electrode portion 31 and protects the outer periphery of the electrode portion 31, and an exterior material 33 that packages the electrode portion 31 and the insulating layer 32.

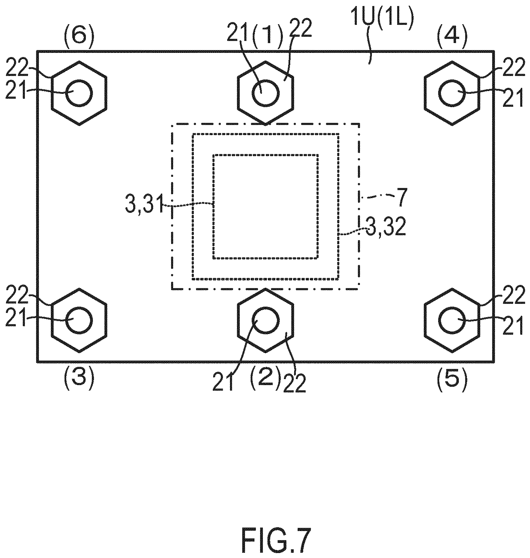

The end plates 1U and 1L are fastened to each other by fastening units (fastening bolt 21 and nut 22). The fastening units (fastening bolt 21 and nut 22) are disposed in a manner of being symmetrical with respect to the electrode portion 31 in plan view (see FIG. 7). In FIGS. 1 and 2, four fastening units (fastening bolts 21 and nuts 22) are disposed, but the number of fastening units may be more than four.

The end plate 1U and the end plate 1L press the storage battery cell 3, the elastic body 5, and the rigid body 4 in the thickness direction by fastening force of the fastening units (fastening bolt 21 and nut 22) to apply a predetermined surface pressure to the storage battery cell 3.

Although not shown, the elastic body 5 and the rigid body 4 can also be sandwiched between the end plate 1L and the structure. In this case, the rigid body 4 is in contact with the storage battery cell 3, and the elastic body 5 is in contact with the end plate 1L.

As shown in FIGS. 1 and 2, the rigid body 4 is disposed such that an outer shape thereof accommodates the storage battery cell 3 (particularly, the electrode portion 31) therein in plan view, and a main surface of the rigid body 4 on a storage battery cell 3 side is in surface contact with the storage battery cell 3 (particularly, the electrode portion 31).

On the other hand, a concave portion 41 (deformation preventing portion) is formed in a main surface of the rigid body 4 on an end plate 1U side, and the elastic body 5 is fitted into the concave portion 41. The concave portion 41 has an opening and an inner wall that have a shape following an outer shape (rectangle) of the elastic body 5 in plan view and have an outer shape slightly smaller than the outer shape of the elastic body 5 in plan view.

The rigid body 4 (the same applies to the end plate 1U and the end plate 1L) is made of a highly rigid material such as stainless steel (SUS 304).

For the elastic body 5, at least a material having an elastic modulus (Young's modulus) lower than that of the rigid body 4 and an elastic limit higher than that of the rigid body 4 is applied, and silicone rubber 70° is preferable. In addition, as a material of the elastic body 5, silicone rubber 90°, polymethyl methacrylate (PMMA), polyethylene terephthalate (PET), kapton (registered trademark), an epoxy resin, polypropylene (PP), polytetrafluoroethylene (PTFE), rubber (natural rubber, synthetic rubber), or the like can be applied.

Since layers (to be described later) adjacent to one another in the electrode portion 31 according to the present embodiment are in contact with one another in a solid state, it is necessary to apply an appropriate surface pressure (for example, 4 MPa or more) in the thickness direction to prevent a decrease in electric conductivity and lithium ion conductivity.

In the present embodiment, the elastic body 5 has a role of equalizing pressing force from the end plate 1U (end plate 1L). However, when the elastic body 5 receives the pressing force from the end plate 1U (end plate 1L), the elastic body 5 is deformed in a plane direction (direction perpendicular to the thickness direction), and a surface pressure applied on the storage battery cell 3 side is reduced by an amount of deformation.

Correspondingly, the elastic body 5 is fitted into the concave portion 41. Accordingly, the deformation of the elastic body 5 in the plane direction (direction perpendicular to the thickness direction) is prevented, and the elastic body 5 has a role of increasing an efficiency of transmitting, to the rigid body 4 and the storage battery cell 3, the pressing force applied to the elastic body 5. A thickness of the elastic body 5 exposed from the rigid body 4 (concave portion 41) is preferably smaller than a thickness of the elastic body 5 fitted into the concave portion 41. Accordingly, the deformation of the elastic body 5 in the plane direction can be effectively prevented.

As shown in FIGS. 1 and 2, in the storage battery cell 3, a height of the insulating layer 32 may be smaller than that of the electrode portion 31, and a step is formed between the electrode portion 31 and the insulating layer 32. Accordingly, when the elastic body 5 is directly pressed against the storage battery cell 3, the elastic body 5 is deformed following a step shape, and accordingly, for example, a surface pressure applied to the electrode portion 31 is distributed such that the surface pressure decreases toward an outer peripheral side of the electrode portion 31.

However, in the present embodiment, the rigid body 4 is disposed between the elastic body 5 and the storage battery cell 3, and the rigid body 4 can prevent the deformation in the thickness direction of a portion of the elastic body 5 outside an outer shape of the electrode portion 31 in plan view. Accordingly, uniformity of the surface pressure applied to the electrode portion 31 can be enhanced.

In the first embodiment, the elastic body 5 may be divided into a plurality of pieces in the plane direction, but it is preferable that the elastic body 5 is disposed in a manner of being symmetrical with respect to the electrode portion 31 in plan view. Further, a plurality of concave portions 41 are also disposed based on the arrangement of the electrode portions 31.

The concave portion 41 may be formed in the end plate 1U instead of the rigid body 4. Further, the concave portion 41 may be formed in each of the rigid body 4 and the end plate 1U. In this case, a thickness of the elastic body 5 is set to be thicker than a sum of a depth of the concave portion 41 formed in the rigid body 4 and a depth of the concave portion 41 formed in the end plate 1U.

As shown in FIG. 3, the electrode portion 31 is a laminate in which a positive electrode collector foil 311, a positive electrode layer 314, a solid electrolyte layer 313, a negative electrode layer 315, and a negative electrode collector foil 312 are laminated in this order. As the electrode portion 31, a structure in which a plurality of stages of the laminates are laminated is also applicable. Further, as the electrode portion 31, a structure in which a plurality of stages of laminates in which a positive electrode collector foil 311, a positive electrode layer 314, a solid electrolyte layer 313, a negative electrode layer 315, a negative electrode collector foil 312, a negative electrode layer 315, a solid electrolyte layer 313, a positive electrode layer 314, and a positive electrode collector foil 311 are laminated in this order are laminated is also applicable.

The positive electrode collector foil 311 is a thin plate formed of metal such as aluminum (Al). The negative electrode collector foil 312 is a thin plate formed of metal such as stainless steel (SUS) or copper (Cu). External electrodes electrically connected to an outside of the exterior material 33 are connected to the positive electrode collector foil 311 and the negative electrode collector foil 312, respectively.

The solid electrolyte layer 313 contains a solid electrolyte as a main component, and is a layer interposed between the positive electrode layer 314 and the negative electrode layer 315. Examples of a solid electrolyte material include a sulfide solid electrolyte and an oxide solid electrolyte, and the sulfide solid electrolyte is preferred. As the sulfide solid electrolyte, for example, a lithium phosphorous sulfide compound (for example, argyrodite (Li₆PS₅Cl)) or an LGPS-based material (for example, Li₁₀GeP₂S₁₂) is suitable.

The positive electrode layer 314 preferably contains a positive electrode active material containing sulfur. A type of the positive electrode active material containing sulfur is not particularly limited, and examples thereof include particles or thin films of an organic sulfur compound or an inorganic sulfur compound in addition to a sulfur element (S). The positive electrode active material may be any material capable of discharging lithium ions during charging and occluding the lithium ions during discharging by utilizing an oxidation-reduction reaction of sulfur.

The negative electrode layer 315 is made of a negative electrode active material containing at least lithium metal or lithium alloy. In addition, as a material of the negative electrode layer 315, any material can be applied as long as the material can occlude lithium ions during charging and discharge the lithium ions during discharging.

When the electrode portion 31 is charged, a thickness thereof increases since the negative electrode layer 315 occludes the lithium ions conducted from a positive electrode layer 314 side as the lithium metal, and conversely, when the electrode portion 31 is discharged, the thickness thereof decreases since the negative electrode layer 315 discharges the lithium metal as the lithium ions to the positive electrode layer 314 side.

As shown in FIGS. 1 and 2, the insulating layer 32 is disposed in a frame shape surrounding the outer periphery of the electrode portion 31. As a material of the insulating layer 32, it is possible to apply ultraviolet curing resins such as Aronix (registered trademark) and ARON OXETANE (registered trademark). Further, a thermosetting resin may also be used as the material of the insulating layer 32, and polyethylene terephthalate (PET), an epoxy resin, or the like can be applied. In addition, as the material of the insulating layer 32, kapton (registered trademark), polypropylene (PP), polytetrafluoroethylene (PTFE), rubber (natural rubber and synthetic rubber), or the like can be applied.

### [Surface Pressure Distribution]

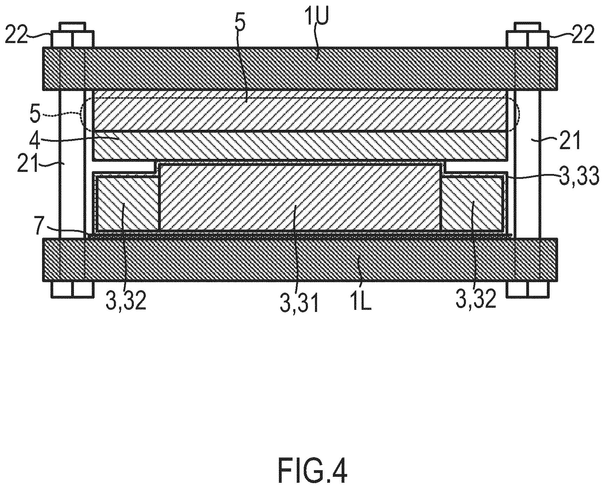

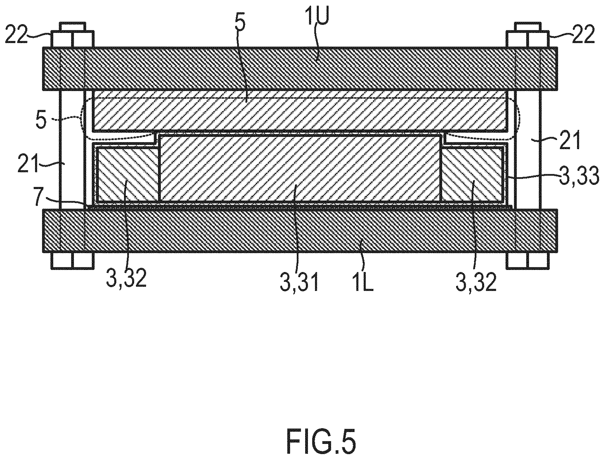

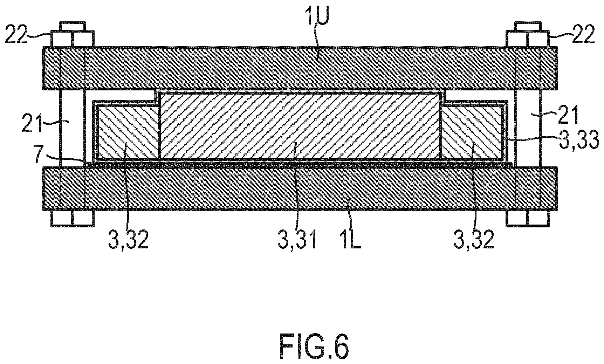

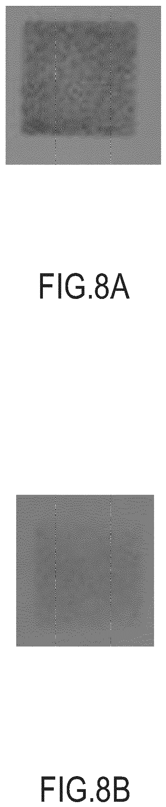

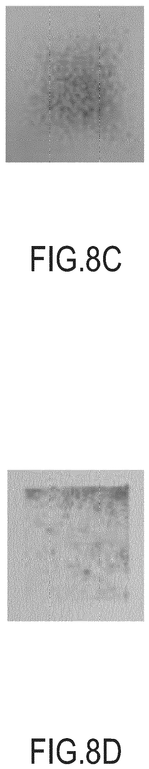

FIG. 4 is a cross-sectional view of a pressurizing structure for a storage battery according to a first comparative example. FIG. 5 is a cross-sectional view of a pressurizing structure for a storage battery according to a second comparative example. FIG. 6 is a cross-sectional view of a pressurizing structure for a storage battery according to a third comparative example. FIG. 7 is a diagram showing an arrangement for measuring a surface pressure distribution of the electrode portion 31. FIG. 8A is a diagram showing the surface pressure distribution applied to the electrode portion 31 according to the first embodiment. FIG. 8B is a diagram showing a surface pressure distribution applied to the electrode portion 31 according to the first comparative example. FIG. 8C is a diagram showing a surface pressure distribution applied to the electrode portion 31 according to the second comparative example. FIG. 8D is a diagram showing a surface pressure distribution applied to the electrode portion 31 according to the third comparative example.

The inventors of the present application studied the surface pressure distribution of the electrode portion 31 in the pressurizing structure of the storage battery according to the first embodiment by comparing with the first to third comparative examples. The surface pressure distribution was checked by the following procedure.

A pressure sensitive paper 7 (for a prescale low pressure (LW) manufactured by FUJIFILM Corporation) is disposed on the end plate 1L (jig), and the storage battery cell 3, the rigid body 4 (no rigid body 4 in FIGS. 5 and 6), the elastic body 5 (no elastic body 5 in FIG. 6), and the end plate 1U (jig) are laminated in this order on the pressure sensitive paper 7 at a position corresponding to a center of the end plate 1L (jig) (see FIGS. 4 and 7).

Then, the end plate 1U and the end plate 1L are fastened to the fastening units (fastening bolts 21 and nuts 22) to press the storage battery cell 3, the rigid body 4, and the elastic body 5. When the fastening units (fastening bolts 21 and nuts 22) are fastened, a torque wrench is used, and the fastening units (fastening bolts 21 and nuts 22) are fastened by a predetermined rotation amount (for example, 45 degrees) in the order of (1) to (6) as shown in FIG. 7 until predetermined torque and a set pressure to be described later are reached.

Thereafter, the fastening units (fastening bolts 21 and nuts 22) are loosened and opened, and the pressure sensitive paper 7 is taken out to check a surface pressure.

In the pressurizing structure (illustration of the pressure sensitive paper 7 is omitted) for a storage battery according to the first embodiment shown in FIG. 2, the electrode portion 31 of the storage battery cell 3 has a rectangular shape of 20 mm × 20 mm in plan view, and the rigid body 4 (for example, SUS 304) has a thickness of 3 mm and a rectangular shape of 25 mm × 25 mm. Further, the elastic body 5 (for example, silicone rubber 70°) has a thickness of 2 mm and a rectangular shape of 20 mm × 20 mm in plan view. The concave portion 41 has a depth of about 1.5 mm and a rectangular shape of 20 mm × 20 mm in plan view. Accordingly, before the pressing, the elastic body 5 is exposed from the concave portion 41 (rigid body 4) by about 0.5 mm.

Here, as the SUS 304 used as the rigid body 4, PARNN-25-25-3-CSC (dimensions: 3 × 25 × 25, surface polishing Ra: 0.4 pm to 1.4 pm, flatness 0.05 mm for length 100 mm, parallelism: 0.012 mm, entire circumference light chamfering) manufactured by MISUMI was applied.

As the silicone rubber 70° used as the elastic body 5, SR-70T manufactured by Tigers Polymer Corporation (dimensions: 3 × 25 × 25, tolerance: < ± 0.25 mm, uneven thickness: < 0.35 mm) was applied.

The pressurizing structure for a storage battery according to the first comparative example shown in FIG. 4 is different from the first embodiment in that the concave portion 41 is not provided, and the elastic body 5 is sandwiched between the rigid body 4 and the end plate 1U. The elastic body 5 (before the pressurizing) has a thickness of 3 mm and a rectangular shape of 25 mm × 25 mm in plan view, but when the elastic body 5 is pressurized by the fastening units (fastening bolts 21 and nuts 22), the elastic body 5 expands in plane direction as shown by a broken line.

The pressurizing structure for a storage battery according to the second comparative example shown in FIG. 5 is different from that of the first embodiment in that the rigid body 4 (concave portion 41) is not provided, and the elastic body 5 is sandwiched between the storage battery cell 3 and the end plate 1U. The elastic body 5 (before the pressurizing) has a thickness of 3 mm and a rectangular shape of 25 mm × 25 mm in plan view, but when the elastic body 5 is pressurized by the fastening units (fastening bolts 21 and nuts 22), the elastic body 5 expands in plane direction as shown by a broken line, and a portion of the elastic body 5 outside the electrode portion 31 in plan view is deformed in a manner of being curved toward a storage battery cell 3.

The pressurizing structure for a storage battery according to the third comparative example shown in FIG. 6 is different from that of the first embodiment in that the rigid body 4 (concave portion 41) and the elastic body 5 are not provided.

As shown in FIG. 8A, in the case of the pressurizing structure for a storage battery according to the first embodiment, the pressure sensitive paper 7 is colored such that an outer shape of the electrode portion 31 is transferred thereto, and has a coloring distribution in which a degree of the coloring is substantially uniform (the surface pressure on the electrode portion 31 is also substantially uniform). This is because, as described above, the elastic body 5 equalizes the pressing force from the end plate 1U in the plane direction and prevents the elastic body 5 from expanding in the plane direction by fitting the elastic body 5 into the concave portion 41, thereby reducing diffusion in the plane direction of the pressing force applied to the elastic body 5 and accordingly applying, to the entire electrode portion 31, a surface pressure corresponding to the pressing force from the end plate 1U.

As shown in FIG. 8B, in the case of the pressurizing structure for a storage battery according to the first comparative example, the pressure sensitive paper 7 is colored such that an outer shape of the electrode portion 31 is transferred thereto, and has a coloring distribution in which a degree of the coloring is substantially uniform (the surface pressure on the electrode portion 31 is also substantially uniform), but the degree of the coloring is thinner than the coloring shown in FIG. 8A. This is because, as shown in FIG. 4, when the elastic body 5 receives the pressing force in the thickness direction, the elastic body 5 expands in the plane direction as shown by the broken line, and the pressing force applied to the rigid body 4 and the storage battery cell 3 decreases accordingly.

As shown in FIG. 8C, in the case of the pressurizing structure according to the second comparative example, the pressure sensitive paper 7 is colored such that an outer shape of the electrode portion 31 is ambiguous, and has a coloring distribution in which the coloring becomes lighter toward an outside from a portion facing a center of the electrode portion 31. This is because, as shown in FIG. 5, when the elastic body 5 receives the pressing force, the elastic body 5 expands in the plane direction as shown by the broken line, and the portion disposed outside the electrode portion 31 in plan view is deformed in a manner of being curved toward the storage battery cell 3, and the portion does not receive a compressive stress, and thus the pressing force received at a portion of the elastic body 5 which overlaps with the electrode portion 31 in plan view is more diffused toward an outer peripheral side as the pressing force approaches the outer periphery of the electrode portion 31.

As shown in FIG. 8D, in the case of the pressurizing structure according to the third comparative example, the pressure sensitive paper 7 is colored such that an outer shape of the electrode portion 31 is transferred thereto, but has a coloring distribution in which a specific peripheral edge portion is colored extremely darkly, and the other peripheral edge portion opposite to the specific peripheral edge portion is hardly colored. This is because a main surface of the end plate 1U on an electrode portion 31 side is not completely parallel to a main surface of the electrode portion 31, and the end plate 1U presses the electrode portion 31 in a state in which the main surface of the end plate 1U is inclined with respect to the main surface of the electrode portion 31.

### [Quantitative Evaluation of Surface Pressure Distribution]

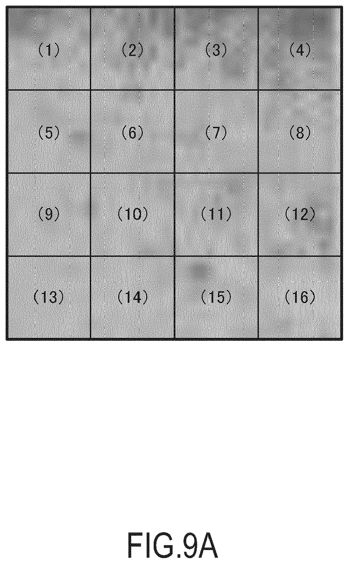

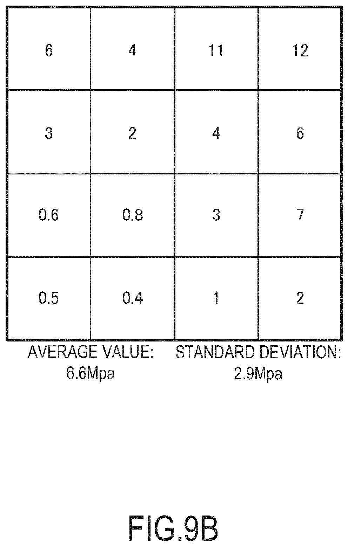

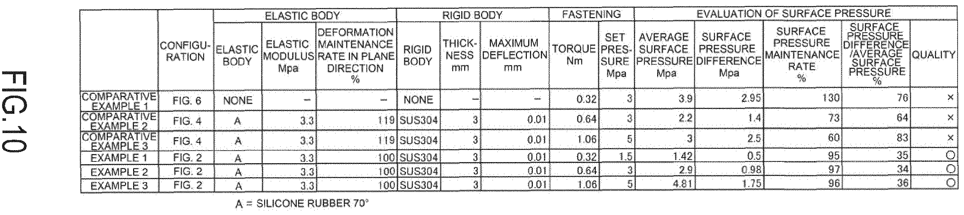

FIG. 9A is a diagram showing a procedure of a quantitative evaluation of the surface pressure distribution, and is a diagram of dividing a portion of the pressure sensitive paper 7 pressed by the electrode portion 31 into a plurality of areas. FIG. 9B is a diagram showing the procedure of the quantitative evaluation of the surface pressure distribution, and is a diagram of calculating a surface pressure of each area and calculating an average value of surface pressures of an entirety and the like based on the surface pressure of each area. FIG. 10 is a table showing quantitative evaluations of surface pressure distributions in Comparative Examples 1 to 3 and Examples 1 to 3.

The surface pressure distribution of the electrode portion 31 is quantitatively evaluated based on the coloring distribution formed on the pressure sensitive paper 7. As an evaluation procedure, as shown in FIG. 9A, the portion of the pressure sensitive paper 7 onto which the surface pressure of the electrode portion 31 is transferred is divided into a plurality of portions (16 portions in FIGS. 9A and 9B).

Further, for example, using a map showing a relationship between a degree of coloring (brightness) of the pressure sensitive paper 7 and the surface pressure, as shown in FIG. 9B, an average value of a degree of coloring (brightness) of the pressure sensitive paper 7 in each area is calculated, and the surface pressure corresponding to the average value is extracted from the map. Further, a quality of the surface pressure distribution is determined in consideration of a relationship between the average value of the surface pressure of the entire electrode portion 31 obtained from the plurality of surface pressures and the set pressure (pressing force) of the fastening unit (bolt and nut 22), a variation in the plurality of surface pressures, and the like.

Each of Examples 1 to 3 shown in FIG. 10 has the configuration shown in FIG. 2 (first embodiment), and silicone rubber 70° (elastic modulus: 3.3 MPa) is used as the elastic body 5. Accordingly, a dimensional maintenance rate in the plane direction in each of Examples 1 to 3 is 100% (no change). Further, the rigid body 4 in each of Examples 1 to 3 is made of SUS 304 (thickness: 3 mm and maximum deflection: 0.01 mm), and is not deformed at least by the set pressure (5 MPa) of the fastening unit (fastening bolt 21 and nut 22).

On the other hand, in Examples 1 to 3, tightening torque of the fastening unit and a set pressure (pressing force) applied to the electrode portion 31 side are changed.

In Example 1, torque was set to 0.32 Nm, and a set pressure (pressing force) was set to 1.5 MPa. Accordingly, in Example 1, an average surface pressure was 1.42 MPa, a surface pressure difference was 0.5 MPa, a surface pressure maintenance rate was 95%, and the surface pressure difference/the average surface pressure was 35%.

In Example 2, torque was set to 0.64 Nm, and a set pressure (pressing force) was set to 3 MPa. Accordingly, in Example 2, an average surface pressure was 2.9 MPa, a surface pressure difference was 0.98 MPa, a surface pressure maintenance rate was 97%, and the surface pressure difference/the average surface pressure was 34%.

In Example 3, torque was set to 1.06 Nm, and a set pressure (pressing force) was set to 5 MPa. Accordingly, in Example 3, an average surface pressure was 4.81 MPa, a surface pressure difference was 1.75 MPa, a surface pressure maintenance rate was 96%, and the surface pressure difference/the average surface pressure was 36%.

Here, a surface pressure difference is a difference between a maximum surface pressure and a minimum surface pressure among surface pressures in a plurality of areas shown in FIG. 9. A surface pressure maintenance rate is an average surface pressure/a set pressure (accuracy of the set pressure applied to the electrode portion 31), and it can be said that the closer the surface pressure maintenance rate is to 100%, the more uniform the surface pressure distribution becomes. Further, it can be said that the lower the value of the surface pressure difference/the average surface pressure, the less variation in the surface pressure distribution and the better the surface pressure distribution.

In Examples 1 to 3, the average surface pressure and the surface pressure difference are proportional to the torque and the set pressure, but the surface pressure maintenance rate and the surface pressure difference/average surface pressure are substantially constant.

In the first embodiment (FIG. 2), the surface pressure distribution is substantially uniform as shown in FIG. 8A, but it can be said that even when a fastening state of the fastening unit is changed as shown in FIG. 10, except for the average value (absolute value) of the surface pressure, the surface pressure distribution in the electrode portion 31 is not greatly changed and is stable. Although the thickness of the storage battery cell 3 (electrode portion 31) changes in accordance with the charging and the discharging, it is considered that a large change does not appear in the surface pressure distribution even when the thickness changes in this way. Therefore, in the first embodiment (FIG. 2), a good surface pressure distribution can be stably formed, and variations in a capacity and an output of the storage battery cell 3 can be reduced.

On the other hand, Comparative Example 1 has the configuration in FIG. 6, that is, a configuration in which the end plate 1U directly presses the storage battery cell 3. In this case, torque was set to 0.32 Nm, and a set pressure (pressing force) was set to 3 MPa. Accordingly, in Comparative Example 1, an average surface pressure was 3.9 MPa, a surface pressure difference was 2.95 MPa, a surface pressure maintenance rate was 130%, and the surface pressure difference/average surface pressure was 76%.

In Comparative Example 1, the average surface pressure is higher than the set pressure, and the surface pressure maintenance rate is also high, exceeding 100%. This is due to the surface pressure distribution in Comparative Example 1, as shown in FIG. 8D, in which an extremely strong surface pressure is applied to a specific peripheral edge portion, and almost no surface pressure is applied to another peripheral edge portion opposite to the specific peripheral edge portion. Further, in Comparative Example 1, even if the torque and the set pressure are changed, a tendency of the surface pressure distribution does not change. Accordingly, in Comparative Example 1, it is difficult to apply uniform surface pressure to the entire electrode portion 31, and a capacity and an output of the storage battery cell 3 cannot be sufficiently obtained.

Comparative Examples 2 and 3 have the configuration of FIG. 4, that is, a configuration in which there is no deformation preventing portion (concave portion 41) that prevents the deformation of the elastic body 5 in the plane direction. In Comparative Examples 2 and 3, silicone rubber 70° was applied as the elastic body 5. In Comparative Example 2, torque was set to 0.64 Nm and a set pressure was set to 3 MPa. In Comparative Example 3, torque was set to 1.06 and a set pressure was set to 5 MPa.

In each of Comparative Examples 2 and 3, a dimensional maintenance rate of the elastic body 5 in the plane direction was 119%. That is, it is shown that the elastic body 5 is subjected to the pressing force and crushed in the thickness direction, and a length of one side thereof is accordingly extended by 19%. Accordingly, in Comparative Examples 2 and 3, displacement of the elastic body 5 in the plane direction increases toward the outer peripheral side of the elastic body 5, and a pressing force applied to a rigid body 4 side decreases accordingly.

Accordingly, in Comparative Examples 2 and 3, the surface pressure distribution between the rigid body 4 and the storage battery cell 3 becomes a relatively uniform surface pressure distribution as shown in FIG. 8B due to the rigidity of the rigid body 4, but the surface pressure distribution between the elastic body 5 and the rigid body 4 becomes the surface pressure distribution shown in FIG. 8C.

In Comparative Example 2, an average surface pressure was 2.2 MPa, a surface pressure difference was 1.4 MPa, a surface pressure maintenance rate was 73%, and the surface pressure difference/the average surface pressure was 64%. Further, in Comparative Example 3, an average surface pressure was 3 MPa, a surface pressure difference was 2.5 MPa, a surface pressure maintenance rate was 60%, and the surface pressure difference/the average surface pressure was 83%.

In each of Comparative Examples 2 and 3, the surface pressure maintenance rate is significantly decreased from 100%. This is because, as shown in FIG. 8C, a component of the pressing force received from the end plate 1U side and escaping outward in the plane direction increases toward the outer peripheral side in the elastic body 5. Further, in each of Comparative Examples 2 and 3, when the torque and the set pressure are increased, the surface pressure maintenance rate decreases, and the surface pressure difference/ the average surface pressure is increased. This is because when the torque and the set pressure are increased, a tendency of the surface pressure distribution between the elastic body 5 and the rigid body 4 shown in FIG. 8C appears more remarkably. Accordingly, in Comparative Examples 2 and 3, although an uniform surface pressure can be applied to the electrode portion 31, there is a concern that a capacity and an output of the storage battery cell 3 fluctuate due to changes in the torque and the set pressure, there is a concern that the capacity and the output fluctuate due to a change in the thickness direction accompanying the charging and the discharging of the storage battery cell 3 (electrode portion 31), and an operation of the storage battery cell 3 becomes unstable.

In each of Comparative Examples 2 and 3, when an adhesive is applied between the elastic body 5 and the rigid body 4 and the elastic body 5 is joined to the rigid body 4, outward expansion of the elastic body 5 in the plane direction can be prevented to some extent. However, only a portion close to the rigid body 4 in the thickness direction of the elastic body 5 can be prevented, and an effect of preventing the expansion in the plane direction decreases as a distance from the rigid body 4 in the thickness direction increases.

On the other hand, in Examples 1 to 3 (FIG. 2), when the elastic body 5 is pressed from the end plate 1U, the elastic body 5 is compressed in a manner of sinking into the concave portion 41. Accordingly, expansion in the plane direction of a portion exposed from the concave portion 41 of the elastic body 5 is also prevented by an amount of sinking. Further, the portion of the elastic body 5 sunk and fitted into the concave portion 41 does not expand in the plane direction.

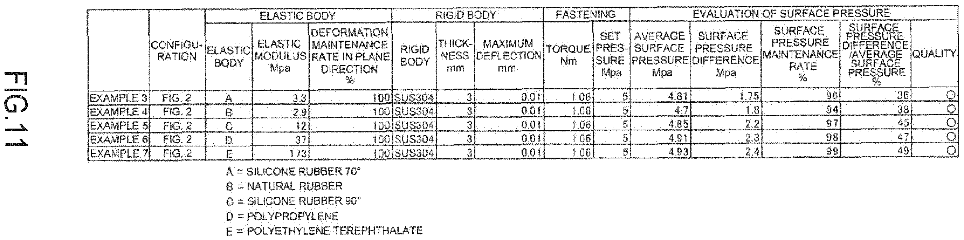

FIG. 11 is a table showing quantitative evaluations of surface pressure distributions in Examples 3 to 7. Examples 3 to 7 show the quantitative evaluations of the surface pressure distributions when the material of the elastic body 5 is changed in the configuration of the first embodiment shown in FIG. 2.

In Example 3, the silicone rubber 70° (elastic modulus (elastic modulus at which a compressive strain is 5% to 10% with respect to a compression pressure of 5 MPa, the same applies hereinafter): 3.3 MPa) is applied as the elastic body 5 as described above. In addition, with respect to the elastic body 5, natural rubber (elastic modulus: 2.9 MPa) is applied in Example 4, silicone rubber 90° (elastic modulus: 12 MPa) is applied in Example 5, polypropylene (PP, elastic modulus (bending strength): 37 MPa) is applied in Example 6, and polyethylene terephthalate-glass 30% (containing PET-GF30 and glass 30%, elastic modulus (compression strength): 173 MPa) is applied in Example 7.

A dimension of the elastic body 5 applied to each of Examples 4 to 7 is the same as in Example 3 (3 mm × 25 mm × 25 mm). Further, torque and a set pressure applied to each of Examples 4 to 7 are the same as those in Example 3 (torque: 1.06 and set pressure: 5 MPa).

According to the above setting, in Example 4, an average surface pressure was 4.7 MPa, a surface pressure difference was 1.8 MPa, a surface pressure maintenance rate was 94%, and the surface pressure difference/the average surface pressure was 38%. In Example 5, an average surface pressure was 4.85 MPa, a surface pressure difference was 2.2 MPa, a surface pressure maintenance rate was 97%, and the surface pressure difference/the average surface pressure was 45%. In Example 6, an average surface pressure was 4.91 MPa, a surface pressure difference was 2.3 MPa, a surface pressure maintenance rate was 98%, and the surface pressure difference/the average surface pressure was 47%. In Example 7, an average surface pressure was 4.93 MPa, a surface pressure difference was 2.4 MPa, a surface pressure maintenance rate was 99%, and the surface pressure difference/the average surface pressure was 49%.

As shown in Examples 3 to 7, as the elastic modulus of the elastic body 5 increases, the average surface pressure, the surface pressure difference, the surface pressure maintenance rate, and the surface pressure difference/the average surface pressure increase, but a rate of the increase is small. Further, the surface pressure maintenance rate achieves 94% even in Example 4 having the lowest elastic modulus among Examples 4 to 7. In Example 7 having the highest elastic modulus among Examples 3 to 7, the surface pressure difference/the average surface pressure is 49%, but the elastic modulus is 99%.

Accordingly, in the case of the configuration of the first embodiment (FIG. 2), as long as a condition in which the elastic modulus of the elastic body 5 is lower than the elastic modulus of the rigid body 4 (for example, SUS 304) is maintained, the good surface pressure distribution can be achieved in the electrode portion 31.

For example, when the elastic body 5 has the elastic modulus in which a compressive strain is 5% to 10% with respect to the set pressure (5 MPa), the elastic body 5 is not completely buried in the concave portion 41 at the time of compression, and the surface pressure distribution in the electrode portion 31 can be made uniform.

As described above, any material having an elastic modulus in a range of 0.5 MPa to 200 MPa, for example, is applicable to the elastic body 5. Further, when Example 7 is examined, a material in which a difference between a surface pressure applied to a central portion of the electrode portion 31 and a surface pressure applied to a peripheral edge portion is 2.4 MPa or less (approximately 3.0 MPa or less) is suitable as the elastic body 5.

### [Effects of First Embodiment]

According to the pressurizing structure for a storage battery according to the first embodiment, the pressurizing structure for a storage battery which applies the pressure in the thickness direction to the structure including the storage battery cell 3 including the electrode portion 31 packaged with a laminate exterior material (exterior material 33) or the structure including a laminate in which the plurality of storage battery cells 3 are laminated, includes the pair of end plates (end plate 1U and end plate 1L) disposed at corresponding two ends in the thickness direction of the structure (for example, the storage battery cell 3) and fastening members (fastening bolts 21 and nuts 22) that fasten the pair of end plates (end plate 1U and end plate 1L) to each other, the elastic body 5 is disposed at at least one of positions sandwiched between the end plate (end plate 1U, end plate 1L) and the structure (for example, the storage battery cell 3), the rigid body 4 is disposed at a position sandwiched between the elastic body 5 and the structure (for example, the storage battery cell 3), and any one of the end plates (end plate 1U and end plate 1L), the elastic body 5, and the rigid body 4 further includes the deformation preventing portion capable of preventing the deformation of the elastic body 5 in the direction perpendicular to the thickness direction.

According to the present embodiment, the elastic body 5 makes the distribution of the pressing force of the fastening units (fastening bolts 21 and nuts 22) via the end plates (end plate 1U and end plate 1L) uniform, and the deformation preventing portion (for example, the concave portion 41) prevents the expansion of the elastic body 5 in the plane direction, thereby preventing the diffusion of the pressing force in the elastic body 5 in the plane direction. The rigid body 4 prevents the deformation of the elastic body 5 in the thickness direction, thereby uniformly and appropriately applying the pressure to the storage battery cell 3 (particularly the electrode portion 31).

In the present embodiment, the deformation preventing portion is the concave portion 41 formed in the rigid body 4 and/or the end plates (end plate 1U and end plate 1L) and into which the outer periphery of the elastic body 5 is fitted. Accordingly, the deformation preventing portion can be implemented with a simple configuration. In particular, the portion of the elastic body 5 which is fitted into the concave portion 41 does not expand in the plane direction due to the pressing force from the end plate (end plate 1U and end plate 1L) side, and the pressing force can be reliably transmitted as the surface pressure to the storage battery cell 3.

### [Second Embodiment and Third Embodiment]

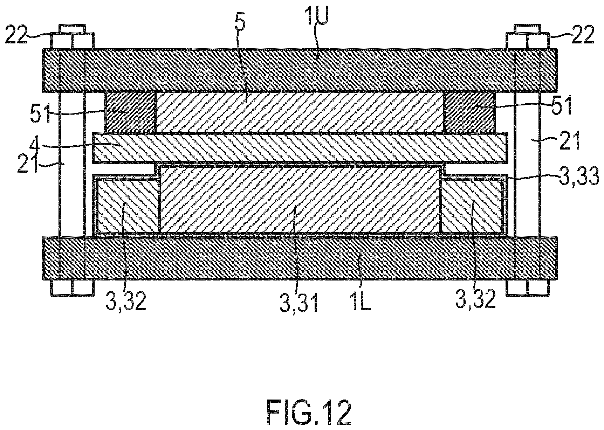

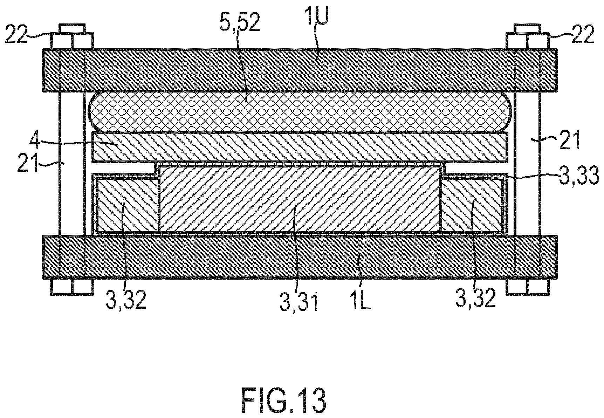

FIG. 12 is a cross-sectional view of a pressurizing structure for a storage battery according to a second embodiment. FIG. 13 is a cross-sectional view of a pressurizing structure for a storage battery according to a third embodiment.

As shown in FIG. 12, in the pressurizing structure for a storage battery according to the second embodiment, a deformation preventing portion is an outer peripheral portion 51 that covers an outer periphery of the elastic body 5 in plan view and is formed of a material having an elastic modulus higher than that of the elastic body 5. By covering the outer periphery of the elastic body 5 in this manner, the outer peripheral portion 51 can prevent expansion of the elastic body 5 in a plane direction, and can accordingly prevent a decrease in a surface pressure applied to the storage battery cell 3 (electrode portion 31).

For example, when silicone rubber 70° (elastic modulus 3.3 GPa) is applied as the elastic body 5, a polymethyl methacrylate resin (PMMA, elastic modulus (bending strength): 125 MPa), a polytetrafluoroethylene resin (PTFE, elastic modulus (compression strength): 11.8 MPa), or the like is suitable for the outer peripheral portion 51. Further, as the outer peripheral portion 51, acrylonitrile-butadiene-styrene (ABS, elastic modulus (bending strength): 64 MPa), polycarbonate (PC, elastic modulus (bending strength): 85 GPa), polyoxymethylene (POM, elastic modulus (bending strength): 88 MPa), polyphenylene sulfide (PPS, elastic modulus (bending strength): 142 MPa), polyethylene terephthalate (PET, elastic modulus (compression strength): 76 MPa to 103 MPa), polyethylene terephthalate-glass 30% (containing PET-GF30 and glass 30%, elastic modulus (compression strength): 173), polyether ether ketone (PEEK, elastic modulus (bending strength): 142 MPa), polyamide 6 (PA6, elastic modulus (bending strength): 96 MPa), polybutyrene telephthalate (PBT, elastic modulus (bending strength): 93 MPa), polyethylene (PE, elastic modulus (bending strength): 20 MPa), polyether sulfone (PES, elastic modulus (bending strength): 129 MPa), polyphenylene ether (PPE, elastic modulus (bending strength): 94 MPa), meta-xylenediamine 6/glass fiber 50% (MXD-6-GF50, elastic modulus (bending strength): 189 MPa), and the like can be applied.

As shown in FIG. 13, in the pressurizing structure for a storage battery according to the third embodiment, a deformation preventing portion is a fibrous material (reinforced fabric 52) disposed in a mesh shape inside the elastic body 5. The reinforced fabric 52 is a material formed by weaving fibers such as nylon, fluorocarbon, and polyethylene, and has high tensile strength. The elastic body 5 (composite elastic body) containing the reinforced fabric 52 is formed, for example, by impregnating the reinforced fabric 52 with a natural rubber material and then vulcanizing an obtained mixture.

The elastic body 5 containing the reinforced fabric 52 may be formed by impregnating the reinforced fabric 52 with a thermosetting resin material and then thermally curing an obtained mixture, or by impregnating the reinforced fabric 52 with an ultraviolet-curable resin material and then curing an obtained mixture by irradiating the obtained mixture with ultraviolet rays.

Even when pressing force is applied from a thickness direction to the elastic body 5 containing the reinforced fabric 52, the expansion of the elastic body 5 in the plane direction is prevented by the reinforced fabric 52, and therefore, the decrease in the surface pressure applied to the storage battery cell 3 (electrode portion 31) can be accordingly prevented.

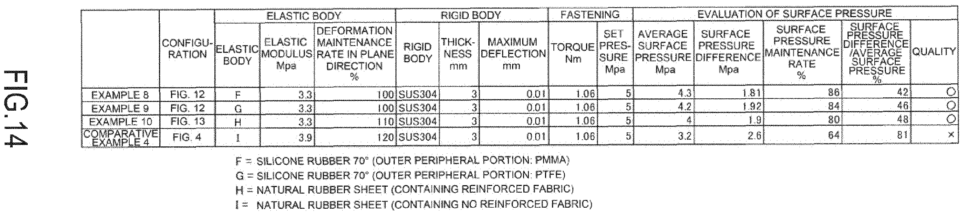

FIG. 14 is a table showing quantitative evaluations of surface pressure distributions in Examples 8 to 10 and Comparative Example 4. The quantitative evaluations of the surface pressure distributions were also performed in the second and third embodiments.

Examples 8 and 9 have a configuration of the second embodiment shown in FIG. 12, and silicone rubber 70° is applied as the elastic body 5. Further, regarding the outer peripheral portion 51, a polymethyl methacrylate resin (PMMA, elastic modulus (bending strength): 125 MPa) was applied in Example 8, and a polytetrafluoroethylene resin (PTFE, elastic modulus (compression strength): 11.8 MPa) was applied in Example 9.

In addition, a dimension of the elastic body 5 (including the outer peripheral portion 51) is the same as a dimension (3 mm × 25 mm × 25 mm) of the elastic body 5 according to Comparative Example 1, and torque and a set pressure are the same as those in Examples 3 to 7.

In Examples 8 and 9, unlike the first embodiment, the elastic body 5 is not fitted into the concave portion 41. However, the outer periphery of the elastic body 5 is covered with the outer peripheral portion 51 having the elastic modulus higher than that of the elastic body 5, and the outer peripheral portion 51 limits the expansion of the elastic body 5 in the plane direction. Accordingly, in Examples 8 and 9 (second embodiment), a dimensional maintenance rate in the plane direction of the elastic body 5 is 100%.

According to the above setting, in Example 8, an average surface pressure was 4.3 MPa, a surface pressure difference was 1.81 MPa, a surface pressure maintenance rate was 86%, and the surface pressure difference/the average surface pressure was 42%. In Example 9, an average surface pressure was 4.2 MPa, a surface pressure difference was 1.92 MPa, a surface pressure maintenance rate was 84%, and the surface pressure difference/the average surface pressure was 46%.

A material (PMMA (elastic modulus: 125 MPa)) of the outer peripheral portion 51 used in Example 8 and a material (PTFE (elastic modulus: 11.8 MPa)) of the outer peripheral portion 51 used in Example 9 have greatly different elastic moduli. However, in Example 8 and Example 9, no large difference is observed in the surface pressure maintenance rate and the surface pressure difference/the average surface pressure, and the surface pressure maintenance rates exceed 80%.

Accordingly, in the configuration of the second embodiment, when the elastic modulus of the outer peripheral portion 51 is sufficiently larger than the elastic modulus of the elastic body 5, a large difference does not occur in the surface pressure maintenance rate and the surface pressure difference/the average surface pressure, and a high surface pressure maintenance rate can be maintained. Therefore, in the pressurizing structure for a storage battery according to the second embodiment, it is also possible to stably achieve a uniform and appropriate surface pressure distribution with respect to the electrode portion 31, and to reduce variations in a capacity and an output of the storage battery cell 3.

Example 10 has a configuration of the third embodiment shown in FIG. 13, and a natural rubber sheet containing the reinforced fabric 52 was applied as the elastic body 5 containing the reinforced fabric 52.

Comparative Example 4 uses a natural rubber sheet containing no reinforced fabric 52, and has a substantially similar configuration to Comparative Example 1 (FIG. 4).

In addition, a dimension of the elastic body 5 (natural rubber sheet) is the same as a dimension (3 mm × 25 mm × 25 mm) of the elastic body 5 according to Comparative Example 1, and torque and a set pressure are the same as those in Examples 3 to 7.

In Example 10, unlike the first embodiment, the elastic body 5 is also not fitted into the concave portion 41. However, the reinforced fabric 52 is disposed inside the elastic body 5, and the reinforced fabric 52 limits the expansion of the elastic body 5 in the plane direction. Accordingly, in Example 10 (first embodiment), the dimensional maintenance rate in the plane direction of the elastic body 5 is 110%. On the other hand, in Comparative Example 4, since no reinforced fabric 52 is provided, the elastic body 5 expands in the plane direction by the pressing force from the end plate 1U, and the dimensional maintenance rate in the plane direction is 120%.

According to the above setting, in Example 10, an average surface pressure was 4 MPa, a surface pressure difference was 1.9 MPa, a surface pressure maintenance rate was 80%, and the surface pressure difference/the average surface pressure was 48%. In Comparative Example 4, an average surface pressure was 3.2 MPa, a surface pressure difference was 2.6 MPa, a surface pressure maintenance rate was 64%, and the surface pressure difference/the average surface pressure was 81%.

In Example 10, although the surface pressure maintenance rate is 80%, which is lower than those in Examples 1 to 9, the surface pressure difference is 1.9 MPa, which is better than Examples 5 to 7 (FIG. 11) and 9. As described above, in Example 10, the dimensional maintenance rate in the plane direction of the elastic body 5 is 110%, but the reinforced fabric 52 hardly expands in the plane direction by the pressing force from the end plate 1U, and therefore, the expansion in the plane direction of the elastic body 5 is also prevented. Accordingly, the surface pressure difference and the surface pressure maintenance rate do not greatly change due to the change in the torque and the set pressure and the change in the thickness accompanying the charging and discharging of the storage battery cell 3. Therefore, Example 10, that is, the third embodiment (FIG. 13) can stably form a uniform and appropriate surface pressure distribution, and can reduce variations in the capacity and the output of the storage battery cell 3.

On the other hand, in Comparative Example 4, there is no unit that prevents the expansion of the elastic body 5 in the plane direction, and the surface pressure difference and the surface pressure maintenance rate may be largely changed by the changes in the torque and the set pressure and the change in the thickness accompanying the charging and discharging of the storage battery cell 3. Accordingly, in Comparative Example 4, it is difficult to form a good surface pressure distribution, and it is also difficult to reduce variations in the capacity and the output of the storage battery cell 3.

Although the embodiments of the present invention have been described above, the above embodiments are merely a part of application examples of the present invention, and do not mean that the technical scope of the present invention is limited to the specific configurations of the above embodiments. The above embodiments can be combined as appropriate.

The present application claims priority under Japanese Patent Application No. 2021-172698 filed to the Japan Patent Office on October 21, 2021, and the entire content of this application is incorporated herein by reference.

## Claims

1. A pressurizing structure for a storage battery which applies pressure in a thickness direction to a structure including a storage battery cell including an electrode portion packaged with a laminate exterior material or the structure including a laminate in which a plurality of the storage battery cells are laminated, the pressurizing structure comprising:
a pair of end plates disposed at corresponding two ends of the structure in the thickness direction; and
a fastening member configured to fasten the pair of end plates to each other, wherein
an elastic body is disposed at at least one of positions sandwiched between the end plate and the structure,
a rigid body is disposed at a position sandwiched between the elastic body and the structure, and
any one of the end plate, the elastic body, and the rigid body further includes a deformation preventing portion configured to prevent deformation of the elastic body in a direction perpendicular to the thickness direction.

2. The pressurizing structure for a storage battery according to claim 1, wherein
the deformation preventing portion is a concave portion which is formed in the rigid body and/or the end plate and into which an outer periphery of the elastic body is fitted.

3. The pressurizing structure for a storage battery according to claim 1, wherein
the deformation preventing portion is an outer peripheral portion that covers an outer periphery of the elastic body and is formed of a material having an elastic modulus higher than that of the elastic body.

4. The pressurizing structure for a storage battery according to claim 1, wherein
the deformation preventing portion is a fibrous material disposed in a mesh shape inside the elastic body.
